# EUROPÄISCHE PATENTSCHRIFT

(11) **EP 1 859 119 B1**
(45) Veröffentlichungstag und Bekanntmachung des Hinweises auf die Patenterteilung: **11.07.2012**
(21) Anmeldenummer: 06708656.1
(22) Anmeldetag: 07.03.2006
(51) Int. Cl.: E05F 15/00, B60J 7/12, F15B 20/00

(54) **VERFAHREN ZUM SCHUTZ VOR EINKLEMMEN UND EINKLEMMSCHUTZVORRICHTUNG**
METHOD FOR PROTECTING AGAINST JAMMING AND JAMMING PROTECTION DEVICE
PROCEDE POUR PROTEGER CONTRE LES COINCEMENTS, ET DISPOSITIF ANTICOINCEMENT

(30) Priorität: 08.03.2005 DE 102005010637
(43) Veröffentlichungstag der Anmeldung: 28.11.2007
(73) Patentinhaber: Wilhelm Karmann GmbH, 49084 Osnabrück (DE)
(72) Erfinder: KLIFFKEN, Markus, 79588 Efringen-Kirchen (DE); HUBER, Andreas, 89558 Böhmenkirch (DE)
(74) Vertreter: Kronthaler, Schmidt & Coll.
(86) Internationale Anmeldenummer: PCT/EP2006/060501
(87) Internationale Veröffentlichungsnummer: WO 2006/094970

(56) Entgegenhaltungen:
- EP-A- 0 468 944
- EP-A- 1 162 375
- EP-A- 1 298 273
- EP-A- 1 403 438
- EP-A- 1 413 773
- WO-A-2004/038149
- DE-A1- 19 906 728
- US-A- 4 250 794
- US-A- 5 851 049

## Beschreibung

Die Erfindung betrifft ein Verfahren zum Schutz vor Einklemmen bei einem hydraulisch betätigtem Element sowie eine Einklemmschutzvorrichtung.

Bei der hydraulischen Betätigung beispielsweise von Verdecken von Cabriolets besteht die Gefahr, dass sich in dem Bewegungsbereich des Verdecks ein Hindernis befindet. Neben der Beschädigung entweder des Verdecks oder aber des Hindernisses besteht eine besondere Gefahr, dass Personen, die sich in dem Bewegungsbereich des Verdecks aufhalten, beispielsweise die Hände an dem sich bewegenden Verdeck klemmen. Um eine automatisierte Bewegung eines Cabrioverdecks durchführen zu können, ist es in der DE 102 48 761 A1 vorgeschlagen, mit Hilfe von kapazitiv messenden Sensoren Gegenstände in dem Bewegungsbereich des Verdecks zu erkennen. Hierzu sind die Sensoren flächig und folienartig ausgebildet und detektieren einen Eingriff in den gesamten Bewegungsraum. Ein verfahren zum Schutz vor Einklemmen an einer Hecklappe ist aus US 5 851 049 A1 bekannt.

Die beschriebene Methode hat den Nachteil, dass zusätzlich zu dem System zur elektrohydraulischen Betätigung des Verdecks ein davon unabhängiges zweites System zur Erfassung eines Eingriffs in den Bewegungsraum installiert werden muss. Zudem wird durch das kapazitiv messende System nicht auf eine tatsächliche Krafteinwirkung auf das sich bewegende Verdeck reagiert, sondern in jedem Fall, also auch dann wenn ein Abschalten der Bewegung nicht erforderlich wäre, das System zum Stillstand gebracht.

Es ist daher die Aufgabe der Erfindung, ein Verfahren zum Schutz vor Einklemmen sowie eine Einklemmschutzvorrichtung zu schaffen, wobei durch eine systemeigene Stellgröße auf eine Klemmkraft geschlossen werden kann, aufgrund derer die Öffnungs-oder Schließbewegung des Verdecks unterbrochen wird.

Die Aufgabe wird durch das erfindungsgemäβe Verfahren nach Anspruch 1 sowie die Einklemmschutzvorrichtung nach Anspruch 16 gelöst.

Bei dem erfindungsgemäßen Verfahren zum Schutz vor Einklemmen bei einem hydraulisch betätigtem Element wird nach dem Starten eines Öffnung- bzw. Schließvorgangs einem hydraulischen Betätigungselement ein Volumenstrom mit Druckmittel zugeführt. Der Volumenstrom wird von einer Druckmittelquelle erzeugt.

Während des Öffnungs- bzw. Schließvorgangs wird eine Stellgröße des hydraulischen Betätigungselements ermittelt. Die Stellgröße ist der Druck in dem hydraulischen Betätigungselement. Zwischen dieser Stellgröße und einem vorgegebenen Sollwert wird ein Differenzwert ermittelt. Der so ermittelte Differenzwert wird anschließend mit einem ersten Grenzwert verglichen und in Abhängigkeit von dem Ergebnis des Vergleichs wird der dem Betätigungselement zugeführte Volumenstrom reduziert.

Neben dem hydraulischen Betätigungselement weist die Einklemmschutzvorrichtung hierzu ein Steuergerät auf, das den dem hydraulischen Betätigungselement zugeführten Volumenstrom steuert. In Abhängigkeit von der ermittelten Stellgröße ist durch das Steuergerät der dem Betätigungselement zugeführte Volumenstrom reduzierbar.

In den Unteransprüchen sind vorteilhafte Weiterbildungen des erfindungsgemäßen Verfahrens sowie der erfindungsgemäßen Einklemmschutzvorrichtung dargestellt.

Insbesondere ist es vorteilhaft, einen ersten Grenzwert für den Differenzwert vorzugeben, so dass bei Überschreiten des ersten Grenzwertes durch den Differenzwert der dem hydraulischen Betätigungselement zugeführte Volumenstrom auf Null gesenkt wird. Das Reduzieren des Volumenstroms auf Null hat zur Folge, dass in der jeweiligen Position das Verdeck verharrt, so dass ein weiterer Klemmvorgang nicht entsteht.

Weiter vorteilhaft ist es, bei Überschreiten des Grenzwertes durch den Differenzwert die Richtung des Volumenstroms umzukehren. Damit wird das hydraulische Betätigungselement in entgegen gesetzte Richtung bewegt, und das mit dem Betätigungselement verbundene Verdeck kehrt ebenfalls seine Bewegungsrichtung um. Ist es bereits zu einem Einklemmen beispielsweise einer Hand gekommen, so wird durch die Umkehr der Bewegungsrichtung diese wieder freigegeben. Die Vorgehensweisen des Anhaltens sowie der Umkehr der Bewegungsrichtung lassen sich vorteilhaft kombinieren, indem zusätzlich zu dem ersten Grenzwert, bei dem lediglich die Bewegung angehalten wird, ein zweiter Grenzwert eingeführt wird. Der zweite Grenzwert liegt höher als der erste Grenzwert. Entsteht nun an dem Verdeck beispielsweise sehr plötzlich eine starke Klemmkraft, so überschreitet der Differenzwert auch den zweiten Grenzwert, woraufhin die Bewegungsrichtung umgekehrt wird, und der eingeklemmte Gegenstand bzw. die eingeklemmte Person wieder freigegeben wird.

Eine besonders leicht auswertbare Größe ist z. B. der in dem hydraulischen System herrschende Arbeitsdruck. Da der Arbeitsdruck von verschiedenen Betriebsparametern abhängig ist, wird der als Stellgröße ermittelte Druck vorzugsweise in Abhängigkeit von Systemparametern, wie beispielsweise der Temperatur des Druckmittels oder der Bordspannung des Fahrzeugs korrigiert.

Da während eines ungehinderten Öffnungs- bzw. Schließvorgangs bereits unterschiedlich hohe Drücke auftreten können, ist es weiterhin vorteilhaft, für die Ermittlung des Differenzwerts eine Sollwertkurve vorzugeben, die in dem Steuergerät gespeichert ist und einen Sollwert individuell für jeden Zeitpunkt des Vorgangs liefert. Die Sollwertkurve spiegelt den bei einem ungestörten Vorgang auftretenden Druckverlauf wieder.

Es ist insbesondere vorteilhaft, zusätzlich zu der Stellgröße auch die Änderung der Stellgröße über die Zeit zu ermitteln. Mit Hilfe dieser zweiten Größe können zusätzliche Kriterien aufgestellt werden, so dass nur bei Zusammenspielen der verschiedenen Kriterien ein Hindernis oder ein Einklemmen erkannt werden. So ist es beispielsweise möglich, einen kontinuierlichen Verlauf der Stellgröße, die sich von ihrem Sollwert zunehmend weiter entfernt, einem Alterungsprozess des Systems zuzuordnen, aufgrund dessen beispielsweise höhere Drücke zur Betätigung erforderlich sind. Da hier lediglich eine langsame Änderung der Stellgröße stattfindet und nicht, wie es beim Einklemmen z. B. einer Hand der Fall ist, eine plötzlich auftretende Druckänderung, lässt sich unter Verwendung der Änderung der Stellgröße ein nicht kritischer Betrieb der Betätigungsvorrichtung ermitteln. Dementsprechend muss die Betätigungsvorrichtung nicht abgeschaltet werden.

Ein bevorzugtes Ausführungsbeispiel der erfindungsgemäßen Einklemmschutzvorrichtung sowie des erfindungsgemäßen Verfahrens sind in der Zeichnung dargestellt und werden in der nachfolgenden Beschreibung erläutert. Es zeigen:
- Fig. 1: einen hydraulischen Schaltplan einer erfindungsgemäßen Einklemmschutzvorrichtung;
- Fig. 2: ein Blockschaltbild des erfindungsgemäßen Verfahrens,
- Fig. 3: ein beispielhafter Verlauf des Drucks über der Zeit,
- Fig. 4 und Fig.5: Variationen der hydraulischen Betätigungsvorrichtung gemäß Fig. 1.

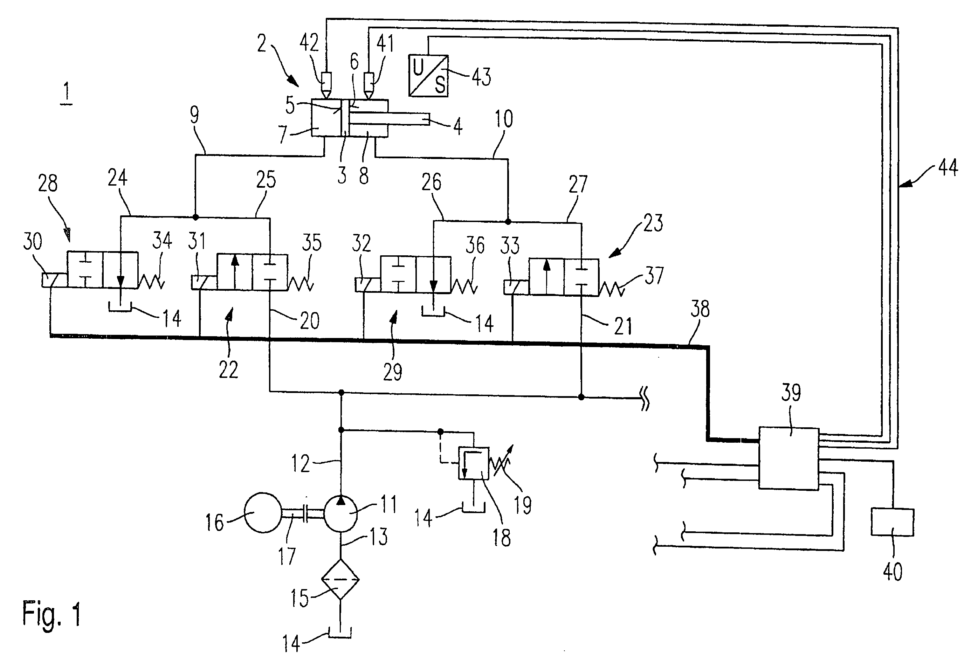

In der Fig. 1 ist ein hydraulischer Schaltplan einer Betätigungsvorrichtung z. B. für ein Verdeck eines Cabriolets oder eine Kofferraumklappe oder ähnliches dargestellt. Die Betätigungsvorrichtung 1 umfasst als hydraulisches Betätigungselement einen Hydraulikzylinder 2, in dem ein Kolben 3 längs verschiebbar angeordnet ist. Der Kolben 3 ist fest mit einer Kolbenstange 4 verbunden, die mit dem Gestänge z. B. des zu betätigenden Verdecks verbunden ist. Der Kolben 3 weist eine erste Kolbenfläche 5 und eine zweite entgegen gesetzt gerichtete Kolbenfläche 6 auf. Die erste Kolbenfläche 5 begrenzt einen ersten Stelldruckraum 7 und die zweite Kolbenfläche 6 begrenzt einen zweiten Stelldruckraum 8 in dem Hydraulikzylinder 2. Zum Beaufschlagen des ersten Stelldruckraums 7 bzw. des zweiten Stelldruckraums 8 mit einem Stelldruck ist mit dem ersten Stelldruckraum 7 eine erste Stelldruckleitung 9 und mit dem zweiten Stelldruckraum 8 eine zweite Stelldruckleitung 10 verbunden.

Zum Erzeugen des zum Verschieben des Kolbens 3 erforderlichen Volumenstroms ist eine Hydropumpe 11 vorgesehen. Die Hydropumpe 11 ist lediglich für die Förderung von Druckmittel in einer Richtung vorgesehen und vorzugsweise als Konstantpumpe ausgebildet. Die Hydropumpe 11 fördert Druckmittel in eine Arbeitsdruckleitung 12. Hierzu saugt die Hydropumpe 11 über eine Saugleitung 13 aus einem Tankvolumen 14 Druckmittel an. Das über die Saugleitung 13 angesaugte Druckmittel wird in einem vorgeschalteten Filter 15 von Schmutzpartikeln gereinigt. Die Hydropumpe 11 ist mit einem Elektromotor 16 über eine Antriebswelle 17 verbunden und wird von diesem mit einer einstellbaren Drehzahl angetrieben.

Um einen kritischen Druckanstieg in der Arbeitsdruckleitung 12 zu verhindern, ist mit der Arbeitsdruckleitung 12 ein Druckbegrenzungsventil 18 verbunden. Das Druckbegrenzungsventil 18 ist durch eine Einstellfeder 19 vorgespannt und öffnet bei Überschreiten eines durch die Einstellfeder 19 bestimmten Drucks. Bei geöffnetem Druckbegrenzungsventil 18 wird die Arbeitsdruckleitung 12 in das Tankvolumen 14 entspannt.

Die Arbeitsdruckleitung 12 verzweigt sich in einen ersten Arbeitsdruckleitungszweig 20 und einen zweiten Arbeitsdruckleitungszweig 21. Der erste Arbeitsdruckleitungszweig 20 führt zu einem ersten Ventil 22. Der zweite Arbeitsdruckleitungszweig 21 führt zu einem zweiten Ventil 23. Das erste Ventil 22 ist mit der ersten Stelldruckleitung 9, die sich in einen ersten Zweig und in einen zweiten Zweig 25 der ersten Stelldruckleitung 9 verzweigt über den zweiten Zweig 25 der ersten Stelldruckleitung 9 verbunden. Mittels des als Schaltventil ausgeführten ersten Ventils 22 ist somit der erste Arbeitsdruckleitungszweig 20 über den zweiten Zweig 25 der ersten Stelldruckleitung 9 und die erste Stelldruckleitung 9 mit dem ersten Stelldruckraum 7 verbindbar.

Auch die zweite Stelldruckleitung 10 weist einen ersten Zweig 26 und einen zweiten Zweig 27 auf. Der zweite Zweig 27 der zweiten Stelldruckleitung 10 ist mit dem zweiten Ventil 23 verbunden, das ebenfalls als Schaltventil ausgeführt ist. In einer entsprechenden Schaltposition ist der zweite Zweig 27 der zweiten Stelldruckleitung 10 mit dem zweiten Arbeitsdruckleitungszweig 21 verbunden. Ist über das erste Ventil 22 bzw. das zweite Ventil 23 die erste bzw. zweite Arbeitsdruckleitung 20 bzw. 21 mit dem zweiten Zweig 25, 26 der ersten Stelldruckleitung 9 bzw. der zweiten Stelldruckleitung 10 verbunden, so wird der erste Stelldruckraum 7 bzw. der zweite Stelldruckraum 8 durch die Hydropumpe 11 mit Druckmittel bedrückt. Es entsteht abhängig von der Schaltposition des ersten Ventils 22 bzw. des zweiten Ventils 23 ein Volumenstrom in den ersten Stelldruckraum 7 bzw. den zweiten Stelldruckraum 8.

Befindet sich beispielsweise das erste Ventil 22 in einer Position, in der der erste Stelldruckraum 7 mit Druckmittel bedrückt wird, so befindet sich das zweite Ventil 23 in seiner in der Fig. 1 dargestellten Ruheposition. In dieser ersten Schaltposition des zweiten Ventils 23 ist die Verbindung zwischen dem zweiten Arbeitsdruckleitungszweig 21 und dem zweiten Zweig 27 der zweiten Stelldruckleitung 10 unterbrochen. Der dem ersten Stelldruckraum 7 von der Hydropumpe 11 zugeführte Volumenstrom bewirkt in dem ersten Stelldruckraum 7 eine Druckerhöhung, die auf die erste Kolbenfläche 5 des Kolbens 3 wirkt. Infolgedessen bewegt sich der Kolben 3 in der Fig. 1 nach rechts, so dass das Volumen des zweiten Stelldruckraums 8 verringert wird. Um einen Volumenausgleich in dem zweiten Stelldruckraum 8 zu ermöglichen wird der zweite Stelldruckraum 8 über die zweite Stelldruckleitung 10 und dessen ersten Zweig 26 sowie ein viertes Ventil 29 in das Tankvolumen 14 entspannt. Das vierte Ventil 29 hat hierzu eine Ruheposition, in der eine durchströmbare Verbindung zwischen dem ersten Zweig 26 der zweiten Stelldruckleitung 10 und dem Tankvolumen 14 besteht.

Bei einer umgekehrten Bewegungsrichtung des Kolbens 3 wird der erste Stelldruckraum 7 über ein drittes Ventil 28 ebenfalls in das Tankvolumen 14 entspannt. Hierzu ist in einer ersten Schaltposition des dritten Ventils 28 der erste Zweig 24 der ersten Stelldruckleitung 9 mit dem Tankvolumen 14 verbunden. Die Ventile 22, 23, 28 und 29 werden in Richtung ihrer Ruheposition jeweils durch eine Feder 34, 34, 36 und 37 belastet.

Die Ventile 22, 23, 28 und 29 sind jeweils als 2/2-Wegeventile ausgeführt und sind bevorzugt Schaltventile. Die Ventile 22, 23, 28 und 29 können von einer ersten Schaltposition, in der die beiden Anschlüsse voneinander getrennt sind in eine zweite Schaltposition gebracht werden, in der eine durchströmbare Verbindung zwischen den beiden Anschlüssen ausgebildet ist. Während sich das erste Ventil 22 und das zweite Ventil 23 in ihrer Ruheposition in der ersten Schaltposition befinden, werden das dritte Ventil 28 und das vierte Ventil 29 durch ihre jeweiligen Federn 34 und 36 in Richtung der zweiten Schaltposition als Ruheposition beaufschlagt. Jeweils entgegen gesetzt zu der Kraft der Federn 34 - 37 wirkt auf die Ventile 22, 23, 28 und 29 die Kraft eines Elektromagneten 30, 31, 32 und 33. Mittels der Elektromagneten 30 - 33 kann jedes der Ventile 22, 23, 28 und 29 einzeln aus seiner Ruheposition heraus in die jeweils andere Schaltposition gebracht werden. Die Elektromagneten 30 - 33 werden dabei über eine Leitung 38 eines Bussystems durch ein Steuergerät 39 mit einem Schaltstrom beaufschlagt.

Wird nun ein Betätigungsschalter 40 durch einen Bediener betätigt, so wird ein entsprechendes Startsignal an das Steuergerät 39 weitergegeben. Mit Hilfe dieses Startsignals wird ein Öffnungs- bzw. Schließvorgang eines Cabrioletverdecks eingeleitet. Muss zum Ausführen der Stellbewegung der Kolben 3 in der Fig. 1 z. B. nach links bewegt werden, so werden die Magneten 32 und 33 des zweiten Ventils 23 und des vierten Ventils 29 bestromt. Das vierte Ventil 29 wird daraufhin in seine erste Schaltposition gebracht, in der die Verbindung zwischen dem ersten Zweig 26 der ersten Stelldruckleitung 10 und dem Tankvolumen 14 unterbrochen ist.

Gleichzeitig wird durch den Elektromagneten 33 das zweite Ventil 23 in seine zweite Schaltposition gebracht, in der eine durchströmbare Verbindung von dem zweiten Arbeitsdruckleitungszweig 21 in den zweiten Zweig 27 der zweiten Stelldruckleitung 10 hergestellt ist. Gleichzeitig wird in nicht dargestellter Weise durch das Steuergerät 39 der Elektromotor 16 angesteuert. Die mit dem Elektromotor 16 verbundene Hydropumpe 11 erzeugt einen Volumenstrom und fördert daraufhin Druckmittel in die Arbeitsdruckleitung 12 und damit über das zweite Ventil 23 in den zweiten Stelldruckraum 8.

Die beiden Elektromagneten 30 und 31 des ersten Ventils 22 und des dritten Ventils 28 bleiben unbestromt, so dass ein Abströmen von Druckmittel aus dem ersten Stelldruckraum 7 über das dritte Ventil 28 in das Tankvolumen 14 möglich ist. Wird nun beispielsweise während eines Schließvorgangs zwischen dem Verdeck und dem Scheibenrahmen ein Gegenstand positioniert, so wird die weitere Bewegung des Verdecks blockiert. Dieses Blockieren wird über das Gestänge auf die Kolbenstange 4 übertragen und eine weitere Bewegung des Kolbens 3 damit verhindert. Da das System die Bewegung z. B. aufgrund von Endlagenschaltern als noch nicht abgeschlossen erkennt, wird jedoch weiterhin von der Hydropumpe 11 ein Volumenstrom in den zweiten Stelldruckraum 8 gefördert. Dies hat einen Druckanstieg in dem zweiten Stelldruckraum 8 bzw. dem gesamten Leitungssystem bis dorthin zur Folge. Der in dem Hydraulikzylinder herrschende Druck wird durch einen ersten Drucksensor 41 als Stellgrößenaufnehmer detektiert und ein entsprechendes Signal über eine Messleitung 44 als Stellgröße an das Steuergerät 39 weitergeleitet. Als Stellgröße für die umgekehrte Bewegungsrichtung dient der in dem ersten Stelldruckraum 7 herrschende Druck, der durch einen zweiten Drucksensor 42 ermittelt wird. Weitere relevante Parameter sind der zurückgelegt Stellweg, der durch einen Wegsensor 43 ermittelt wird und die Zeit, wobei der Wegsensor 43 auch als Stellgrößenaufnehmer verwendet werden kann.

In dem Steuergerät 39 ist für eine ungehinderte Stellbewegung des Kolbens 3 eine Sollwertkurve für den Druckverlauf abgespeichert. Mit dieser Sollwertkurve wird nun der Druckwert, der durch den ersten Drucksensor 41 ermittelt wird, verglichen. Der Vergleich des Drucks erfolgt jeweils mit einem der Zeit des Vorgangs oder dem bereits zurückgelegten Weg entsprechenden Sollwert der Sollwertkurve. Die Differenz aus dem gemessenen Druckwert und dem jeweiligen Sollwert ergibt einen Differenzwert, der mit einem ersten Grenzwert verglichen wird. Bevor dieser Differenzwert ermittelt wird, wird vorzugsweise der gemessene Druckwert in Abhängigkeit von weiteren Systemparametern korrigiert. Einfluss auf das System können z. B. die Temperatur des Druckmittels oder die Betriebsspannung des Bordnetzes haben. Als Stellgröße dient dann der entsprechend korrigierte Druckwert.

Überschreitet die Differenz zwischen der Stellgröße und der in dem Steuergerät 39 abgelegten Sollwertkurve einen ersten Grenzwert, so kann in einer einfachen Ausführung des erfindungsgemäßen Verfahrens unmittelbar auf eine auf das Verdeck wirkende Klemm- bzw. Blockierkraft geschlossen werden. Wird eine solche Blockierkraft erkannt, so muss die weitere Bewegung des Verdecks verhindert werden. Hierzu wird durch das Steuergerät 39 der dem zweiten Stelldruckraum 8 zugeführte Volumenstrom an Druckmittel reduziert. Dies kann entweder durch eine Reduzierung der Drehzahl des Elektromotors 16 erfolgen oder aber durch ein Zurücksetzen des Stromsignals des Elektromagneten 33. Aufgrund der Federkraft der Feder 37 kehrt das zweite Ventil 23 dann in seine erste Schaltposition zurück, in der die beiden Anschlüsse des zweiten Ventils 23 voneinander getrennt sind.

Da zu diesem Zeitpunkt normalerweise bereits ein Gegenstand oder eine Hand eingeklemmt wurde, wird vorzugsweise nicht nur das Stromsignal für den Elektromagneten 33 durch das Steuergerät 39 geändert, sondern gleichzeitig auch die Steuersignale für die übrigen Elektromagneten 30 - 32. Dem zufolge wird der zweite Stelldruckraum 8 über das vierte Ventil 29 in Richtung des Tankvolumens 14 entspannt, während der erste Stelldruckraum 7 über das erste Ventil 22 bedrückt wird. Der Kolben 3 bewegt sich daraufhin nach rechts und die Bewegungsrichtung des z. B. schließenden Verdecks kehrt sich um, so dass der eingeklemmte Gegenstand freigegeben wird.

Denkbar ist es auch, das Abschalten bzw. Umkehren der Bewegungsrichtung durch eine zweistufige Grenzwertbildung zu realisieren. Überschreitet der Differenzwert lediglich einen ersten, niedrigeren Grenzwert, so wird das Verdeck angehalten. Kommt es darüber hinaus zu einer weiteren Druckerhöhung in der zweiten Stelldruckkammer 8, so wird in bereits beschriebener Weise die Bewegungsrichtung des Kolbens 3 bei Überschreiten des zweiten, höheren Grenzwerts durch den Differenzwert umgekehrt. Eine solche weitere Druckerhöhung kann beispielsweise entstehen, wenn ein Handgelenk eingeklemmt wurde und die so gefangene Person nun versucht ihre Hand aus der Klemmsituation zu befreien.

Die durch die Betätigungsvorrichtung betätigten Einrichtungen, beispielsweise Cabrioverdecke, Kofferraumklappen, ausfahrbare Spoiler oder ähnliches, unterliegen einem Alterungsprozess, der die Beweglichkeit der beteiligten Komponenten reduziert. Im Laufe der Zeit kann es daher dazu kommen, dass der in bereits beschriebener Weise gebildete Differenzwert allmählich von der Sollwertkurve abweicht. Um zu verhindern, dass eine Betätigung in einem solchen Fall stets zum Anhalten bzw. Reversieren des Systems führt, wird in einer bevorzugten Ausführungsform neben dem Differenzwert im Vergleich mit einem ersten und/oder zweiten Grenzwert als ersten Entscheidungskriterium ein weiteres Entscheidungskriterium herangezogen. Hierzu wird nicht nur der momentane Istwert der Stellgröße, beispielsweise des Drucks in der zweiten Stelldruckkammer 8 ermittelt, sondern zudem der Verlauf des ermittelten Istdrucks berücksichtigt.

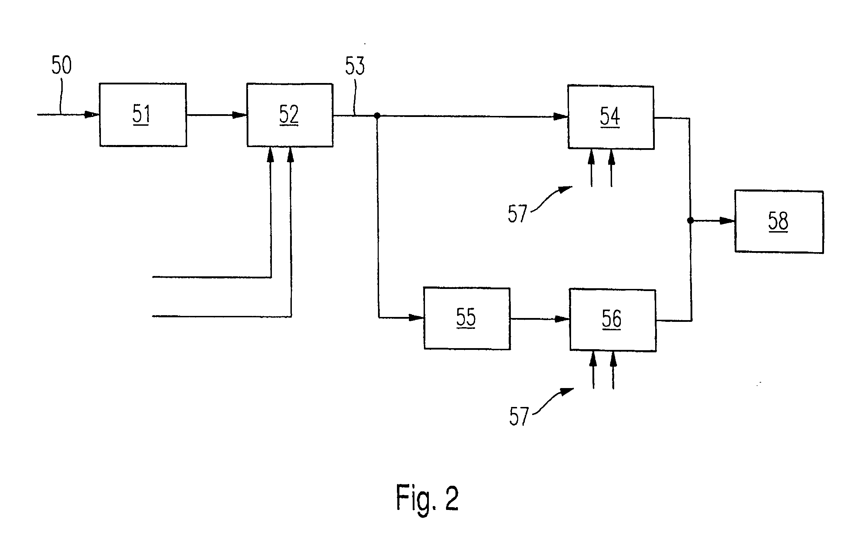

Diese Änderung der Stellgröße kann zusätzlich Aufschluss darüber geben, ob ein unerwartetes Ereignis vorliegt, oder aber ob die Differenzwertzunahme Folge eines Alterungsprozesses ist. Dieses bevorzugte Ausführungsbeispiel des erfindungsgemäßen Verfahrens, das in dem Steuergerät 39 durchgeführt wird, soll anhand der Fig. 2 erläutert werden. Zunächst wird von dem Steuergerät 39 eine Stellgröße 50 eingelesen. Die Stellgröße 50 kann, wie es in den vorstehenden Ausführungsbeispielen bereits erläutert wurde, z. B. der Druck in der ersten oder zweiten Stelldruckkammer 7, 8 sein. Um kurzfristige Einflüsse zu eliminieren, wie sie z. B. durch Unebenheiten der Fahrbahn oder ähnliche Erschütterungen entstehen können, wird die Stellgröße zunächst über ein Tiefpassfilter 51 gefiltert. Die gefilterte Stellgröße wird einem Korrekturglied 52 zugeführt, in dem Einflüsse von anderen Systemparametern, beispielsweise der Batteriespannung oder der Druckmitteltemperatur berücksichtigt werden.

Am Ausgang 53 des Korrekturglieds 52 liegt somit eine korrigierte Stellgröße bzw. ein korrigierter Druck vor. Diese korrigierte Stellgröße wird einem ersten Vergleichsglied 54 zugeführt. In dem ersten Vergleichsglied 54 wird ein Differenzwert zwischen der korrigierten Stellgröße sowie dem jeweils korrespondierenden Sollwert einer abgelegten Sollwertkurve ermittelt. Die Sollwertkurve berücksichtigt ausgehend von einem anfänglichen Sollwert, dessen Änderung während des Öffnungs- bzw. Schließvorgangs. Hierbei werden Änderungsparameter wie z. B. die Zeit oder die zurückgelegte Wegstrecke zur Ermittlung des korrespondierenden Sollwerts der Sollwertkurve berücksichtig. Gleichzeitig wird die korrigierte Stellgröße einem Differenzierfilter 55 zugeführt.

Das Differenzierfilter 55 ermittelt die zeitliche Änderung der korrigierten Stellgröße und gibt diesen Änderungswert weiter an ein zweites Vergleichsglied 56. In dem zweiten Vergleichsglied 56 wird auch die Änderung der korrigierten Stellgröße, die durch das Differenzierfilter 55 ausgegeben wird, mit einem entsprechenden Änderungssollwert verglichen. Die Einflüsse der Zeit und des Verfahrwegs als weitere Einflussgrößen 57 in den Vergleichsgliedern 54 und 56 werden vorzugsweise einmal bestimmt und im Anschluss werden in dem Steuergerät 39 feste Sollwertkurven abgelegt. Der am Ausgang des Vergleichsgliedes 54 ausgegebene Differenzwert sowie am Vergleichsglied 56 ausgegebene Änderungsdifferenzwert werden einem Entscheidungsglied 58 übergeben, der beide Werte berücksichtigt und mit einem entsprechenden Grenzwert als Kriterium vergleicht.

Entsprechend dem ersten und zweiten Grenzwert wird bei der Auswertung des Änderungsdifferenzwerts ein Maximalwert festgelegt. Wird durch den Änderungsdifferenzwert der Maximalwert überschritten, also ein steiler Druckanstieg erkannt, so kann daraus eine plötzlich auftretende Klemmkraft geschlossen werden. Umgekehrt lässt ein unterhalb des Maximalwerts liegender Änderungsdifferenzwert auf eine schwergängige Mechanik schließen, auch wenn durch den Differenzwert der erste Grenzwert überschritten wird. Das Entscheidungsglied gibt dann als Ergebnis nicht die Reduzierung des Volumenstroms vor.

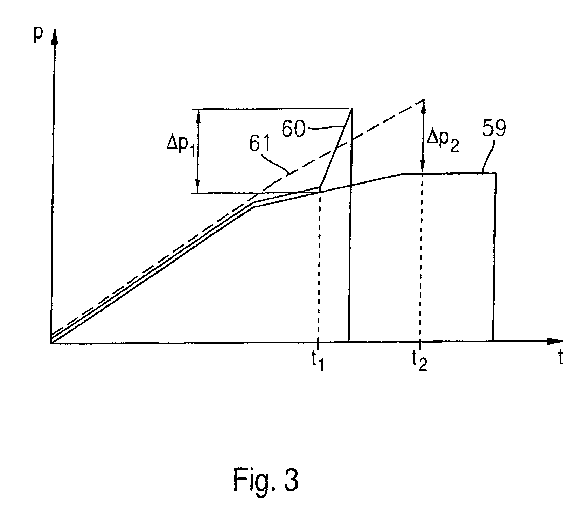

In der Fig. 3 ist die unterschiedliche Wirkung mit und ohne der Berücksichtigung der Änderung der korrigierten Stellgröße veranschaulicht. Eine Sollwertkurve 59 gibt dabei den Verlauf der Stellgröße, in dem dargestellten Ausführungsbeispiel des Drucks, in einer der Stelldruckräume 7, 8 über der Zeit an. Zudem ist als Kurve 60 ein erster Verlauf der korrigierten Stellgröße aufgetragen. Während beide Kurven 59 und 60 zu Beginn nahezu identisch verlaufen, tritt im Zeitpunkt t₁ eine starke Erhöhung des Drucks auf. Dieser Verlauf der Kurve 60 kann zweifelsfrei einem zusätzlich auftretenden Ereignis, beispielsweise einem Einklemmvorgang, zugeordnet werden.

Anders liegt der Fall bei der gestrichelt dargestellten Kurve 61. Dies kann beispielsweise ein typischer Verlauf eines Systems mit schwergängigen Gelenken sein. Im Zeitpunkt t₂ haben sich die korrigierte Stellgröße und die Sollwertkurve 59 um den Differenzwert Δp₂ voneinander entfernt. Bei Zugrundelegen eines einfachen Entscheidungskriteriums, nämlich einfach des ersten Grenzwerts, der hier überschritten sei, würde daher auch hier ein Einklemmvorgang erkannt. Da jedoch bei dem bevorzugten Ausführungsbeispiel zusätzlich die Änderung der korrigierten Stellgröße in das Entscheidungskriterium einbezogen wird, kann die Kurve 61 eindeutig von der Kurve 59, trotz übereinstimmender Differenzwerte unterschieden werden, da der Änderungsdifferenzwert den vorgegebenen Maximalwert nicht überschreitet.

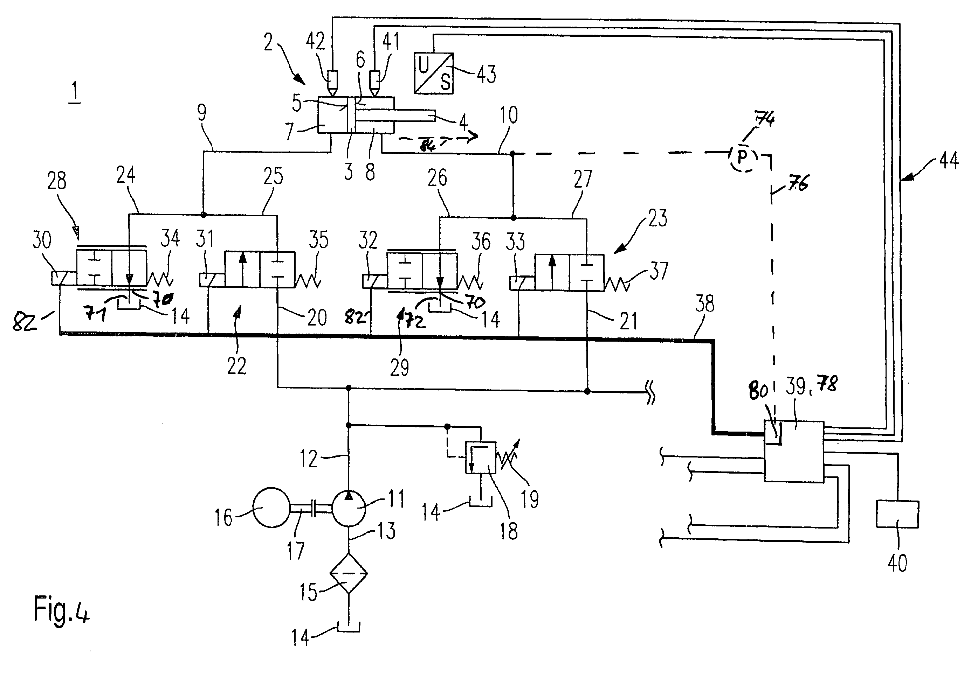

In Figur 4 ist eine Variation des hydraulischen Schaltplans aus Figur 1 dargestellt, bei der das dritte Ventil 28 und das vierte Ventil 29 als Proportionalventile ausgebildet sind, deren Druckmittel-Durchlassstrom über die Steuereinheit 39 variabel einstellbar ist. Die Ruheposition des dritten und des vierten Ventils 28, 29 stellt hierbei eine offene, durchströmbare Verbindung zwischen dem ersten Stellraum 7 und dem Tankvolumen 14 dar, so dass bei einem unbestromten dritten und vierten Ventil 28, 29 die Stelldruckräume 7, 8 auf gleichem Druckniveau mit dem Tankvolumen 14 liegen. Dabei sind die beiden Ventile 28, 29 direkt und unmittelbar mit dem Tankvolumen 14 verbunden, wobei insbesondere keine weiteren Schalt- oder Proportionalventile zwischen den dritten und vierten Ventilen 28, 29 und dem Tankvolumen 14 angeordnet sind. Der Ausgang 70 des dritten und vierten Ventils 28, 29 ist dabei jeweils durch eine separate Leitung 71, 72 direkt mit dem Tankvolumen 14 verbunden. Das erste Ventil 22 und das zweite Ventil 23 sind jeweils als Schaltventile ausgebildet, die einen sperrenden Zustand und einen durchlassenden Zustand aufweisen. Dabei ist der sperrende Zustand als Ruheposition ausgebildet, so dass bei einem Stromausfall die Verbindung zwischen der Druckmittelquelle 11 und den Stelldruckräumen 7, 8 unterbrochen ist. Die in Figur 4 dargestellte Anordnung mit zwei Proportionalventilen in Gestalt des dritten und vierten Ventils 28, 29, die jeweils mit dem Tankvolumen 14 verbunden sind, und zwei Schaltventilen in Gestalt des ersten und zweiten Ventils 22, 23, die mit der Druckmittelquelle 11 verbunden sind, ist besonders vorteilhaft mit 2/2-Wegeventile 22, 23, 28, 29 realisierbar, da hierbei alle vier 2/2-Wegeventile, bzw. gegebenenfalls weitere Vierereinheiten von 2/2-Wegeventile für zusätzliche Kolben 3 günstig in einem gemeinsamen Ventilblock herstellbar sind. Optional weist die Hydraulikschaltung in Figur 4 einen oder mehrere Drucksensoren 74 auf, wie dieser in Figur 4 gestrichelt dargestellt ist. Der Drucksensor 74 ist dabei zwischen dem zweiten Stelldruckraum 8 und den parallel geschalteten Ventilen in Gestalt des zweiten und vierten Ventils 23, 29 in der Stelldruckleitung 10 angeordnet. Dabei wird der Druck an der Zylinderausgangsseite des Stellraums 8 erfasst und ein Drucksignal 76 an die Auswerteeinheit 78 weitergeleitet. Die Auswerteeinheit 78 weist einen Druckregler 80 auf, mittels dessen ein Stellsignal 82 generiert wird, mit dem die Proportionalventile in Gestalt des dritten und vierten Ventils 28, 29 angesteuert werden. Die Auswerteeinheit 78 ist beispielsweise in das Steuergerät 39 integriert. In der Auswerteeinheit 78 können hierbei Informationen über die Positionen der Geschwindigkeit der Kolbenstange 4 gewonnen werden, wodurch über die elektrische Ansteuerung der Proportionalventile in Gestalt des dritten und vierten Ventils 28, 29 ein Regelkreislauf geschaffen werden kann. Bewegt sich beispielsweise die Kolbenstange 4 in Pfeilrichtung 84 nach rechts (Ausfahrrichtung) kann über die Drucksensoren 41, 42, 74 ein Stellsignal 82 für das Proportionalventil in Gestalt des vierten Ventils 29 generiert werden, direkt die Verstellgeschwindigkeit der Kolbenstange 4 über die Auslassgeschwindigkeit des Druckmittels aus dem zweiten Stellraum 8 in das Tankvolumen 14 regelt. Dabei ist die Verstellbewegung der Kolbenstange 4 völlig unabhängig von der von der Druckmittelquelle 11 aufgebrachten Leistung, bzw. im ersten Stelldruckraum 7 aufgebauten Druck.

In gleicher Weise kann in die Stelldruckleitung 9 zwischen dem ersten Stelldruckraum 7 und den beiden parallel angeordneten Ventilen in Gestalt des dritten und ersten Ventils 28, 22 ein weiterer Drucksensor 74 eingebaut werden, um die Einfahrbewegung der Kolbenstange 4 entsprechend über das Proportionalventil in Gestalt des dritten Ventils 28 zu steuern.

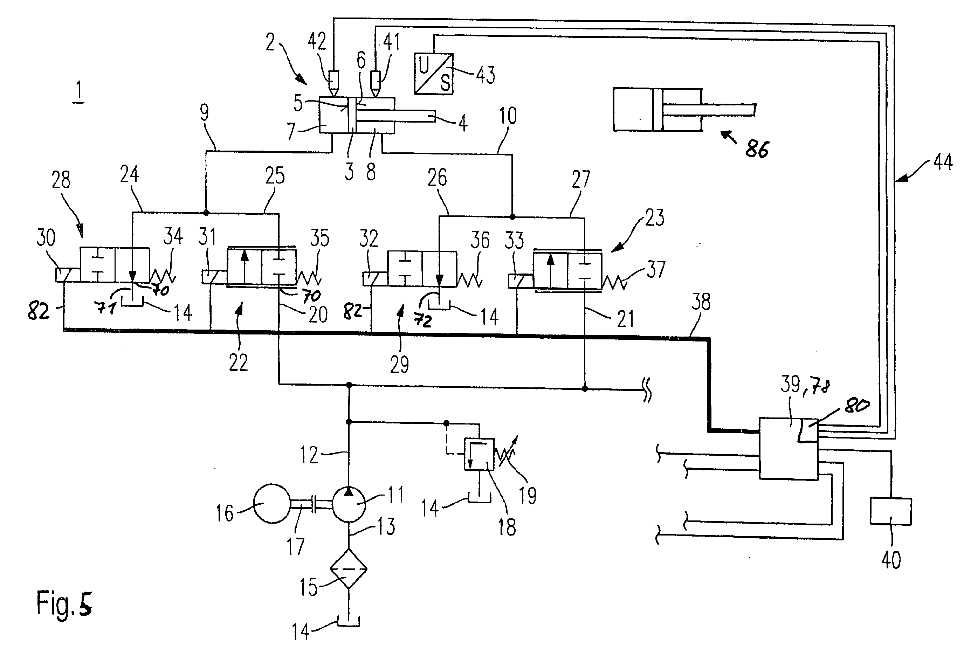

Figur 5 zeigt eine weitere Variante der hydraulischen Schaltung gemäß Figur 1, bei der das erste Ventil 22 und das zweite Ventil 23 als Proportionalventile und das dritte Ventil 28 und das vierte Ventil 29 als Schaltventile ausgebildet sind. Hierbei wird die Verstellgeschwindigkeit der Kolbenstange 4 nicht über den Abfluss des Druckmittels aus den Stelldruckräumen 7 und 8 gesteuert, wie dies in der Schaltung gemäß Fig. 4 der Fall ist, sondern über die Zufuhr des Druckmittels von der Druckmittelquelle 11 über die Proportionalventile in Gestalt des ersten und zweiten Ventils 22, 23 in die Stelldruckräume 7, 8 hinein. Hierbei kann wiederum unabhängig vom Volumenstrom der Druckmittelquelle 11 der Zufluss des Druckmittels in den ersten oder zweiten Stelldruckraum 7 oder 8 über die variable Durchflusssteuerung der Proportionalventile in Gestalt des ersten und zweiten Ventils 22 bzw. 23 gesteuert werden. Hierzu wird beispielsweise das erste Ventil 22 aus seiner gesperrten Ruhestellung in eine zumindest teilweise geöffnete Schaltstellung überführt, wodurch der erste Stelldruckraum 7 mittels eines einstellbaren Volumenstroms befüllt, und somit die Kolbenstange 4 nach rechts in Ausfahrrichtung 84 bewegt wird. Dabei ist der zweite Stelldruckraum 8 über das vierte Ventil in Gestalt des Schaltventil 29 direkt unmittelbar mit dem tank Volumen 14 verbunden, so dass die Verstellgeschwindigkeit der Kolbenstange 4 nur durch die Zufuhr des Druckmittels in den ersten Stelldruckraum 7 gesteuert wird. Auch bei dieser Anordnung der Proportionalventile in Gestalt des ersten und zweiten Ventils 22, 23 und der Schaltventile in Gestalt des dritten und vierten Ventils 28, 29 können wie in Fig. 4 wieder Drucksensoren 74 angeordnet werden, mittel derer der Volumenstrom der Proportionalventile 22, 23 angesteuert wird. Anstelle des einen Kolbens 3 können in der dargestellten Schaltung gleichzeitig auch mehrere Kolben 86 angesteuert werden oder mehrere Schaltungen für mehrere Kolben 86 nebeneinander aufgebaut werden. Die in Fig. 1, 4 und 5 dargestellte Schaltungen können besonders vorteilhaft für die Verstellung des Cabrio-Verdecks verwendet werden, bei dem die einzelnen zueinander beweglich angeordneten Verdeckteile jeweils mit einer Kolbenstange 4 verbunden sind, um die Verdeckteile automatisch zu verstellen.

In einer weiteren Anwendung der hydraulischen Schaltung können insbesondere auch dreh- oder kippbare Teile am Kraftfahrzeug, wie Verschlüsse oder Klappen mittels dem dargestellten Komfortantrieb verstellt werden. Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. Beispielsweise kann die Anordnung der Drucksensoren 74 und der Wegsensoren 51 mit jeder Variation der hydraulischen Schaltung kombiniert werden, um die entsprechend dargestellten Ansteuerungen zu realisieren.

## Patentansprüche

1. Verfahren zum Betätigen einer Klappe oder eines Verdecks eines Cabriolets mittels einer hydraulischen Betätigungsvorrichtung (1) mit einem Schutz vor Einklemmen, mit folgenden Verfahrensschritten:
- Starten eines Öffnungs- oder Schließvorgangs,
- Zuführen eines Volumenstroms von einer Druckmittelquelle (11) zu einem hydraulischen Betätigungselement (2),
- Ermitteln einer Stellgröße des hydraulischen Betätigungselements (2) durch zumindest einen Stellgrößenaufnehmer (41, 42, 43, 74),
- Ermitteln eines Differenzwerts zwischen der ermittelten Stellgröße und einem Sollwert durch ein Steuergerät (39),
- Vergleichen des Differenzwerts zwischen der Stellgröße und dem Sollwert mit einem ersten Grenzwert durch das Steuergerät (39) und
- Reduzieren des dem hydraulischen Betätigungselement (2) zugeführten Volumenstroms in Abhängigkeit von dem Differenzwert, wobei zur Ermittlung der Stellgröße der an dem hydraulischen Betätigungselement (2) wirkende Stelldruck erfasst wird,
**dadurch gekennzeichnet,**
**dass** das Verstellsystem Endlagenschalter aufweist, die den Abschluss der Bewegung des hydraulischen Betätigungselementes (2) erkennen, und ein Druckanstieg im Stelldruckraum (7, 8) und/oder in der Druckmittelzuleitung (9, 10) bei einer nicht abgeschlossenen Bewegung als ein Blockieren aufgrund eines Hindernisses erkannt wird.

2. Verfahren nach Anspruch 1,
**dadurch gekennzeichnet,**
**dass** der in das hydraulische Betätigungselement (2) geförderte Volumenstrom bei Überschreiten des ersten Grenzwerts durch den Differenzwert auf Null reduziert wird.

3. Verfahren nach Anspruch 1 oder 2,
**dadurch gekennzeichnet,**
**dass** die Richtung des Volumenstroms bei Überschreiten des ersten Grenzwerts durch den Differenzwert umgekehrt wird.

4. Verfahren nach Anspruch 1 oder 2,
**dadurch gekennzeichnet,**
**dass** die Richtung des Volumenstroms bei Überschreiten eines weiteren, im Vergleich zu dem ersten Grenzwert größeren zweiten Grenzwerts durch den Differenzwert umgekehrt wird.

5. Verfahren nach Anspruch 1,
**dadurch gekennzeichnet,**
**dass** zur Ermittlung der Stellgröße der Stelldruck in Abhängigkeit von Systemparametern korrigiert wird.

6. Verfahren nach einem der Ansprüche 1 bis 5,
**dadurch gekennzeichnet,**
**dass** zur Ermittlung der Stellgröße ein Stellweg des hydraulischen Betätigungselements (2) erfasst wird.

7. Verfahren nach einem der Ansprüche 1 bis 6,
**dadurch gekennzeichnet,**
**dass** zum Bestimmen des Differenzwerts in dem Steuergerät (39) eine Sollwertkurve gespeichert ist.

8. Verfahren nach einem der Ansprüche 1 bis 7,
**dadurch gekennzeichnet,**
**dass** zusätzlich zur Stellgröße eine Änderung der Stellgröße ermittelt wird.

9. Verfahren nach Anspruch 8,
**dadurch gekennzeichnet,**
**dass** die Änderung der Stellgröße mit einem Änderungsgrenzwert verglichen wird.

10. Verfahren nach Anspruch 9,
**dadurch gekennzeichnet,**
**dass** in Abhängigkeit von dem Differenzwert und dem Ergebnis des Vergleichs der Änderung der Stellgröße mit dem Änderungsgrenzwert der Volumenstrom reduziert wird.

11. Verfahren nach einem der Ansprüche 1 bis 10,
**dadurch gekennzeichnet,**
**dass** als Sollwertkurve der Druckverlauf für eine ungehinderte Stellbewegung des hydraulischen Betätigungselementes (2) abgespeichert wird, und der aktuelle, mittels eines Drucksensors (41, 42, 74) gemessene Druckwert mit einem der vergangenen Zeit oder dem zurückgelegten Weg entsprechenden Druckwert der abgespeicherten Sollwertkurve verglichen wird.

12. Verfahren nach einem der Ansprüche 1 bis 11,
**dadurch gekennzeichnet,**
**dass** nach dem Erkennen einer Blockierkraft das Stromsignal für einen Elektromagneten (31) zurückgesetzt wird, wodurch ein erstes 2/2-Wegeventil (22') aufgrund der Federkraft in seine Gesperrt-Position bewegt wird und die Zufuhr des Volumenstroms in einen ersten Stelldruckraum (7) unterbrochen wird.

13. Verfahren nach einem der Ansprüche 1 bis 12,
**dadurch gekennzeichnet,**
**dass** beim Erkennen einer Blockierkraft gleichzeitig das Stromsignal von weiteren Elektromagneten (31, 32, 33) geändert wird, wodurch der zweite Stelldruckraum (8) über ein entsprechendes drittes 2/2-Wegeventil (29) bedrückt wird und dadurch die Bewegungsrichtung des Betätigungselementes (2) bzw. des Cabriolet-Verdecks umgedreht wird.

14. Verfahren nach einem der Ansprüche 1 bis 13,
**dadurch gekennzeichnet,**
**dass** ein Änderungsdifferenzwert als zeitliche Änderung der korrigierten Stellgröße ermittelt wird und bei Überschreiten eines Maximalwertes ein steiler Druckanstieg als plötzlich auftretende Einklemmkraft erkannt wird.

15. Verfahren nach einem der Ansprüche 1 bis 14,
**dadurch gekennzeichnet,**
**dass** die hydraulische Betätigungsvorrichtung mindestens einen doppelwirkenden Hydraulikzylinder (3) mit einem ersten und einem zweiten Stellraum (7,8) sowie einer Kolbenstange (4) aufweist, mit folgenden Verfahrensschritten:
- Der erste Stellraum (7) wird zum Ausfahren der Kolbenstange (4) über ein zweites, als Schaltventil (16) ausgebildetes 2/2-Wegeventil (23) mit Druck von der Druckmittelquelle (11) beaufschlagt,
- Der zweite Stellraum (8) wird dabei über ein viertes 2/2-Wegeventil (29), das als Proportionalventil ausgebildet ist, zum Tankvolumen (14) hin entspannt geschaltet, so dass das hydraulische Druckmittel vom vierten Ventil (29) direkt in einer separaten Leitung (72) ohne Zwischenschaltung weiterer Ventile in das Tankvolumen (14) fließt.
- Zum Einfahren der Kolbenstange (4) wird der zweite Stelldruckraum (8) über ein erstes, als Schaltventil ausgebildetes 2/2-Wegeventil (22) mit Druck von der Druckmittelquelle (11) beaufschlage.
- Gleichzeitig wird dabei der erste Stellraum über ein drittes 2/2-Wegeventil (28), das als Proportionalventil ausgebildet ist, zum Tankvolumen (14) hin entspannt geschaltet, so dass hydraulisches Druckmittel vom dritten Ventil (28) direkt in einer separaten Leitung (71) ohne Zwischenschaltung weiterer Ventile in das Tankvolumen (14) fließt.

16. Hydraulische Betätigungsvorrichtung (1), insbesondere für ein Cabrioletverdeck, mit einer Einklemmschutzvorrichtung und einem hydraulischen Betätigungselement (2), das mit einer Druckmittelquelle (11) über zumindest eine Arbeitsdruckleitung (12) verbunden ist, und mit zumindest einem Stellgrößenaufnehmer (41, 42, 43, 74) zum Ermitteln einer Stellgröße des hydraulischen Betätigungselements (2), und mit einem Steuergerät (39) zum Steuern eines dem hydraulischen Betätigungselement (2) zugeführten Volumenstroms, wobei der Volumenstrom in Abhängigkeit von einer Stellgröße des hydraulischen Betätigungselements (2) reduzierbar ist,
wobei die Stellgröße ein Stelldruck ist und wobei zum Ermitteln des Stelldrucks ein Drucksensor (41, 42, 74) als Stellgrößenaufnehmer an dem hydraulischen Betätigungselement (2) und/oder einer dem hydraulischen Betätigungselement (2) den Stelldruck zuführenden Stelldruckleitung (9, 10) angeordnet ist.
**dadurch gekennzeichnet,**
**dass** das Verstellsystem Endlagenschalter aufweist, die den Abschluss der Bewegung des hydraulischen Betätigungs- elementes (2) erkennen, und ein Druckanstieg in einem Stell- druckraum (7, 8) des Betätigungselements und/oder in einer Druckmittelzuleitung (9,10) bei einer nicht abgeschlossenen Bewegung als ein Blockieren aufgrund eines Hindernisses erkannt wird.

17. Hydraulische Betätigungsvorrichtung nach Anspruch 16,
**dadurch gekennzeichnet,**
**dass** durch das Steuergerät (39) ein Differenzwert zwischen der Stellgröße und einem Vergleichswert ermittelbar ist und der dem hydraulischen Betätigungselement (2) zugeführte Volumenstrom bei Überschreiten eines ersten Grenzwerts durch den Differenzwert reduzierbar ist.

18. Hydraulische Betätigungsvorrichtung nach einem der Ansprüche 16 oder 17,
**dadurch gekennzeichnet,**
**dass** der Volumenstrom auf Null reduzierbar ist.

19. Hydraulische Betätigungsvorrichtung nach einem der Ansprüche 16 bis 18,
**dadurch gekennzeichnet,**
**dass** die Richtung des Volumenstroms umkehrbar ist.

20. Hydraulische Betätigungsvorrichtung nach einem der Ansprüche 16 bis 19,
**dadurch gekennzeichnet,**
**dass** zum Ermitteln einer Stellgröße ein Wegsensor (43) an dem hydraulischen Betätigungselement angeordnet ist.

21. Hydraulische Betätigungsvorrichtung nach einem der Ansprüche 16 bis 20,
**dadurch gekennzeichnet**
durch ein Steuergerät (39), das insbesondere über ein Bussystem Elektromagneten (30-33) individuell, unabhangig voneinander einen individuell bemessenen Strom zuführt, um Ventile (22, 23, 28, 29) zu betätigen.

22. Hydraulische Betätigungsvorrichtung nach einem der Ansprüche 16 bis 21,
**dadurch gekennzeichnet,**
**dass** ein erstes und zweites, Ventil (22,23) als Schaltventil ausgebildet sind, um einen Kolben (3) hydraulisch einzuspannen und das Abströmen von Druckmittel aus dem sich verkleinernden ersten bzw. zweiten Stelldruckraum (7 bzw. 8) zu verringern.

23. Hydraulische Betätigungsvorrichtung nach einem der Ansprüche 16 bis 22,
**dadurch gekennzeichnet,**
**dass** ein bzw. das erste und ein bzw. das zweite Ventil (22, 23) als Proportionalventil ausgebildet sind, und ein drittes und ein viertes Ventil (28, 29) als Schaltventil ausgebildet sind, um die Bewegungsgeschwindigkeit einer Kolbenstange (49) zu beeinflussen-insbesondere unabhängig von einer Drehzahlsteuerung eines Elektromotors (20) einer Druckmittelquelle (11).

24. Hydraulische Betätigungsvorrichtung nach Anspruch 23,
**dadurch gekennzeichnet,**
**dass** das das dritte und vierte Ventil (22, 23) direkt mit einem Tankvolumen (14) verbunden sind, so dass über das dritte und vierte Ventil (28, 29) wahlweise ein erster Stelldruckraum (7) oder ein zweiter Stelldruckraum (8) zu dem Tankvolumen (14) ohne Zwischenschaltung weiterer Ventile entspannbar ist.

25. Hydraulische Betätigungsvorrichtung nach einem der Ansprüche 16 bis 24,
**dadurch gekennzeichnet,**
**dass** mit einem Eingang des Steuergeräts (39) eine Signalleitung (44) verbunden ist, über die dem Steuergerät (39) ein Spannungssignal eines Wegmessers (41, 42) zugeführt ist, der die jeweilige Position einer bzw. der Kolbenstange (4) erfasst.

26. Hydraulische Betätigungsvorrichtung nach einem der Ansprüche 23 oder 24,
**dadurch gekennzeichnet,**
**dass** die die Ruheposition des dritten und des vierten Ventils (28, 29) einer Schaltposition mit durchströmbarer Verbindung vom ersten bzw. zweiten Steildruckraum (7 bzw. 8) zum Tankvolumen (14) entspricht, wodurch das Druckniveau des ersten bzw. zweiten Stelldruckraums (7 bzw. 8) bei unbestromten Elektromagneten (30, 33) dem Druckniveau des Tankvolumens (14) entspricht, und das erste und das zweite Ventil (22, 23') als Ruheposition eine Schaltposition mit gesperrtem Durchfluss aufweist.

27. Hydraulische Betätigungsvorrichtung nach einem der Ansprüche 23, 24 oder 26,
**dadurch gekennzeichnet,**
**dass** mindestens ein Drucksensor (41, 42, 74) zwischen dem Stellraum (7, 8) und jeweils parallel geschalteten ersten und dritten (22, 28) bzw. zweiten und vierten (23, 29) Ventilen in der Stelldruckleitung (9, 10) angeordnet ist, wobei ein Drucksignal (76) einer Auswerteeinheit (78) zugeführt wird, um die Position und die Geschwindigkeit der Kolbenstange (4), - und damit insbesondere des Cabriolet-Verdecks zu ermitteln, wobei die Auswerteeinheit (78) über einen Druckregler (80) den unmittelbar mit dem Tankvolumen (14) verbundenen dritten und vierten Ventilen (28, 29) ein Stellsignal zuführt, um die Geschwindigkeit der Kolbenstange (4), bzw. des Cabriolet-Verdecks zu steuern.

28. Hydraulische Betätigungsvorrichtung nach einem der Ansprüche 16 bis 27,
**dadurch gekennzeichnet,**
**dass** die Betätigungsvorrichtung als ein Cabriolet-Verdeck oder eine Kofferraumklappe oder ein ausfahrbarer Spoiler ausgebildet ist.

## Claims

1. A method for actuating a lid or a hood of a convertible vehicle by means of a hydraulic actuating device (1) with protection against jamming, said method comprising the steps of:
- starting an opening or closing operation,
- feeding a volumetric flow from a pressure fluid source (11) to a hydraulic actuating element (2),
- determining an adjustment variable of the hydraulic actuating element (2) by at least one adjustment variable sensor (41, 42, 43, 74),
- determining a difference value between the adjustment variable determined and a setpoint by means of a control unit (39),
- comparing the difference value between the adjustment variable and the setpoint with a first threshold by means of the control unit (39) and
- reducing the volumetric flow fed to the hydraulic actuating element (2) as a function of said difference value, wherein the adjustment pressure acting on the hydraulic actuating element (2) is measured in order to determine said adjustment variable,
**characterised in that**
the adjustment system comprises limit switches which detect the completion of the movement of the hydraulic actuating element (2), and **in that** a pressure increase in the adjustment pressure chamber (7, 8) and/or in the pressure fluid supply line (9, 10) during a movement not completed is detected as blocking caused by an obstacle.

2. The method according to claim 1, **characterised in that** the volumetric flow fed to the hydraulic actuating element (2) is reduced to zero upon the first threshold being exceeded by the difference value.

3. The method according to claim 1 or 2, **characterised in that** the direction of the volumetric flow is reversed upon the first threshold being exceeded by the difference value.

4. The method according to claim 1 or 2, **characterised in that** the direction of the volumetric flow is reversed upon a further, second threshold, greater than the first threshold, being exceeded by the difference value.

5. The method according to claim 1, **characterised in that** the adjustment pressure is corrected as a function of system parameters in order to determine the adjustment variable.

6. The method according to any one of claims 1 to 5, **characterised in that** an adjustment travel of the hydraulic actuating element (2) is detected in order to determine the adjustment variable.

7. The method according to any one of claims 1 to 6, **characterised in that** a setpoint curve is stored in the control unit (39) for determining the difference value.

8. The method according to any one of claims 1 to 7, **characterised in that** a change in the adjustment variable is determined in addition to the adjustment variable.

9. The method according to claim 8, **characterised in that** the change in the adjustment variable is compared to a change threshold.

10. The method according to claim 9, **characterised in that** the volumetric flow is reduced as a function of the difference value and of the result of the comparison between the change in the adjustment variable and the change threshold.

11. The method according to any one of claims 1 to 10, **characterised in that** the pressure gradient of an unhindered adjusting movement of the hydraulic actuating element (2) is stored as the setpoint curve, and the actual pressure value measured by means of a pressure sensor (41, 42, 74) is compared to a pressure value of the stored setpoint curve that corresponds to the time passed or the path travelled.

12. The method according to any one of claims 1 to 11, **characterised in that**, upon detection of a blocking force, the current signal for a solenoid (31) is reset, which causes a first 2/2-way valve (22') to be moved into its blocked position due to the spring force and interrupts the supply of the volumetric flow to a first adjustment pressure chamber (7).

13. The method according to any one of claims 1 to 12, **characterised in that**, upon detection of a blocking force, the current signal of further solenoids (31, 32, 33) is changed at the same time, causing the second adjustment pressure chamber (8) to be pressurised via a corresponding third 2/2-way valve (29) and thereby reversing the direction of movement of the actuating element (2) and/or of the convertible hood.

14. The method according to any one of claims 1 to 13, **characterised in that** a change difference value is determined as a temporal change of the corrected adjustment variable, and when a maximum value is exceeded, a steep increase in pressure is detected as a sudden jamming force.

15. The method according to any one of claims 1 to 14, **characterised in that** the hydraulic actuating device comprises at least one double-acting hydraulic cylinder (3) with first and second adjustment chambers (7, 8) as well as a plunger (4), said method comprising the following steps, wherein:
- pressure is applied by the pressure fluid source (11), via a second 2/2-way valve (23) provided as a control valve (16), on the first adjustment chamber (7) in order to extend the plunger (4),
- the second adjustment chamber (8) is relieved towards the tank volume (14) by a fourth 2/2-way valve (29) provided as a proportional valve, so that the hydraulic pressure fluid flows from the fourth valve (29) directly into the tank volume (14) in a separate line (72), without interposition of further valves,
- pressure from the pressure fluid source (11) is applied on the second adjustment chamber (8) via a first 2/2-way valve (22) provided as a control valve in order to retract the plunger (4),
- at the same time, the first adjustment chamber is relieved towards the tank volume (14) by a third 2/2-way valve (28) provided as a proportional valve, so that hydraulic pressure fluid flows from the third valve (28) directly into the tank volume (14) in a separate line (71), without interposition of further valves.

16. A hydraulic actuating device (1), in particular for a convertible hood, comprising an anti-jamming device and a hydraulic actuating element (2) which is connected to a pressure fluid source (11) via at least one operating pressure line (12), further comprising at least one adjustment variable sensor (41, 42, 43, 74) for determining an adjustment variable of the hydraulic actuating element (2), and comprising a control unit (39) for controlling a volumetric flow fed to the hydraulic actuating element (2), which volumetric flow can be reduced as a function of an adjustment variable of the hydraulic actuating element (2), wherein the adjustment variable is an adjustment pressure and wherein, in order to determine the adjustment pressure, a pressure sensor (41, 42, 74) is provided as an adjustment variable sensor on the hydraulic actuating element (2) and/or an adjustment pressure line (9, 10) supplying the adjustment pressure to the hydraulic actuating element (2),
**characterised in that**
the adjustment system comprises limit switches which detect the completion of the movement of the hydraulic actuating element (2), and **in that** a pressure increase in an adjustment pressure chamber (7, 8) of the actuating element (2) and/or in a pressure fluid supply line (9, 10) during a movement not completed is detected as blocking caused by an obstacle.

17. The hydraulic actuating device according to claim 16, **characterised in that** a difference value between the adjustment variable and a comparative value can be determined by the control unit (39) and the volumetric flow supplied to the hydraulic actuating element (2) can be reduced upon a first threshold being exceeded by the difference value.

18. The hydraulic actuating device according to any one of claims 16 or 17, **characterised in that** the volumetric flow can be reduced to zero.

19. The hydraulic actuating device according to any one of claims 16 to 18, **characterised in that** the direction of the volumetric flow is reversible.

20. The hydraulic actuating device according to any one of claims 16 to 19, **characterised in that** a path sensor (43) is arranged on the hydraulic actuating element in order to determine an adjustment variable.

21. The hydraulic actuating device according to any one of claims 16 to 20, **characterised by** a control unit (39), which supplies an individually measured flow to solenoids (30-33) individually, independently of each other, in particular via a bus system, in order to actuate the valves (22, 23, 28, 29).

22. The hydraulic actuating device according to any one of claims 16 to 21, **characterised in that** first and second valves (22, 23) are provided as control valves in order to hydraulically clamp a piston (3) and to reduce the outflow of pressure fluid from the decreasing first and/or second adjustment chamber (7 and/or 8).

23. The hydraulic actuating device according to any one of claims 16 to 22, **characterised in that** a or the first and a or the second valve(s) (22, 23) is/are provided as proportional valve(s) and third and fourth valves (28, 29) are provided as control valves so as to influence the speed of movement of a plunger (49), in particular independently of a speed control of an electric motor (20) of a pressure fluid source (11).

24. The hydraulic actuating device according to claim 23, **characterised in that** the third and fourth valves (22, 23) are directly connected to a tank volume (14), so that a first adjustment pressure chamber (7) or a second adjustment pressure chamber (8) can be selectively relieved towards the tank volume (14) via the third and fourth valves (28, 29), without interposition of further valves.

25. The hydraulic actuating device according to any one of claims 16 to 24, **characterised in that** a signal line (44) is connected to an input of the control unit (39), a voltage signal from a position measuring device (41, 42) being supplied to the control unit (39) via said signal line (44), said position measuring device (41, 42) detecting the respective position of a/the plunger (4).

26. The hydraulic actuating device according to any one of claims 23 or 24, **characterised in that** the inactive position of the third and fourth valves (28, 29) corresponds to a switching position with a fluid connection from the first or second adjustment pressure chamber (7 or 8) to the tank volume (14), so that the pressure level of the first or second adjustment pressure chamber (7 or 8), when the solenoids (30, 33) are not energised, corresponds to the pressure level of the tank volume (14), and the inactive position of the first and second valves (22, 23') is a switching position with a blocked flow.

27. The hydraulic actuating device according to any one of claims 23, 24 or 26, **characterised in that** at least one pressure sensor (41, 42, 74) is arranged between the adjustment chamber (7, 8) and first and third (22, 28) or second and fourth (23, 29) valves, respectively connected in parallel, in the adjustment pressure line (9, 10), with a pressure signal (76) being supplied to an evaluating unit (78) in order to determine the position and speed of the plunger (4) - and thus, in particular, of the convertible hood - said evaluating unit (78) supplying an adjustment signal via a pressure regulator (80) to the third and fourth valves (28, 29) which are directly connected to the tank volume (14), in order to control the speed of the plunger (4) and/or of the convertible hood.

28. The hydraulic actuating device according to any one of claims 16 to 27, **characterised in that** the actuating device is provided as a convertible hood or a boot lid or an extendable spoiler.

## Revendications

1. Procédé d'actionnement d'un hayon ou d'une capote d'un véhicule cabriolet au moyen d'un dispositif d'actionnement hydraulique (1), protégé contre le pincement, ledit procédé comprenant les étapes suivantes:
- commencement d'une opération d'ouverture ou de fermeture,
- amenée d'un débit volumétrique d'une source de fluide de pression (11) vers un élément d'actionnement hydraulique (2),
- détermination d'une grandeur de réglage de l'élément d'actionnement hydraulique (2) par au moins un capteur de grandeur de réglage (41, 42, 43, 74),
- détermination d'une valeur de différence entre la grandeur de réglage déterminée et une valeur de consigne au moyen d'un appareil de commande (39),
- comparaison de la valeur de différence entre la grandeur de réglage et la valeur de consigne avec une première valeur limite au moyen dudit appareil de commande (39) et
- réduction du débit volumétrique amené à l'élément d'actionnement hydraulique (2) selon la valeur de différence, en mesurant la pression de réglage agissant sur l'élément d'actionnement hydraulique (2) afin de déterminer ladite grandeur de réglage,
**caractérisé en ce que**
le système de réglage comprend des commutateurs de renversement de marche qui détectent la fin du déplacement de l'élément d'actionnement hydraulique (2), et **en ce qu'**une augmentation de la pression dans l'enceinte de pression de réglage (7, 8) et/ou dans la conduite d'amenée du fluide de pression (9, 10) pendant un déplacement non pas fini est reconnue comme un blocage à cause d'un obstacle.

2. Procédé selon la revendication 1, **caractérisé en ce que** le débit volumétrique amené dans l'élément d'actionnement hydraulique (2) est réduit à zéro lors du dépassement de la première valeur limite par la valeur de différence.

3. Procédé selon la revendication 1 ou 2, **caractérisé en ce que** la direction du débit volumétrique est renversée lors du dépassement de la première valeur limite par la valeur de différence.

4. Procédé selon la revendication 1 ou 2, **caractérisé en ce que** la direction du débit volumétrique est renversée lors du dépassement d'une deuxième valeur limite additionnelle, supérieure à la première valeur limite, par la valeur de différence.

5. Procédé selon la revendication 1, **caractérisé en ce que** la pression de réglage est corrigée selon des paramètres système afin de déterminer la grandeur de réglage.

6. Procédé selon l'une quelconque des revendications 1 à 5, **caractérisé en ce qu'**un chemin de réglage de l'élément d'actionnement hydraulique (2) est détecté afin de déterminer la grandeur de réglage.

7. Procédé selon l'une quelconque des revendications 1 à 6, **caractérisé en ce qu'**une courbe de valeurs de consigne est mémorisée dans l'appareil de commande (39) afin de déterminer la valeur de différence.

8. Procédé selon l'une quelconque des revendications 1 à 7, **caractérisé en ce qu'**un changement de la grandeur de réglage est déterminé en plus de la grandeur de réglage.

9. Procédé selon la revendication 8, **caractérisé en ce que** ledit changement de la grandeur de réglage est comparé avec une valeur limite de changement.

10. Procédé selon la revendication 9, **caractérisé en ce que** le débit volumétrique est réduit selon la valeur de différence et selon le résultat de la comparaison du changement de la grandeur de réglage avec la valeur limite de changement.

11. Procédé selon l'une quelconque des revendications 1 à 10, **caractérisé en ce que** le gradient de pression d'un mouvement de réglage libre de l'élément d'actionnement hydraulique (2) est mémorisé en tant que courbe de valeurs de consigne, et la valeur de pression actuelle mesurée au moyen d'un capteur de pression (41, 42, 74) est comparée avec une valeur de pression de la courbe de valeurs de consigne mémorisée qui correspond au temps passé ou au chemin parcouru.

12. Procédé selon l'une quelconque des revendications 1 à 11, **caractérisé en ce que**, après la détection d'une force de blocage, le signal de courant pour un solénoïde (31) est remis, ce qui a pour effet de mettre une première vanne 2/2 (22') en position fermée par l'effet de ressort et d'interrompre l'amenée du débit volumétrique dans une première enceinte de pression de réglage (7).

13. Procédé selon l'une quelconque des revendications 1 à 12, **caractérisé en ce que**, lors de la détection d'une force de blocage, le signal de courant d'autres solénoïdes (31, 32, 33) est changé en même temps, ce qui a pour effet de pressuriser la deuxième enceinte de pression de réglage (8) par une troisième vanne 2/2 (29) correspondante et de renverser par conséquent la direction de mouvement de l'élément d'actionnement (2) et/ou de la capote du cabriolet.

14. Procédé selon l'une quelconque des revendications 1 à 13, **caractérisé en ce qu'**une valeur de différence de changement est déterminée en tant que changement temporel de la grandeur de réglage corrigée, et lors du dépassement d'une valeur maximum une augmentation abrupte en pression est reconnue comme une force de pincement soudaine.

15. Procédé selon l'une quelconque des revendications 1 à 14, **caractérisé en ce que** le dispositif d'actionnement hydraulique comprend au moins un vérin hydraulique double effet (3) avec une première et une deuxième enceinte de réglage (7, 8) ainsi qu'une tige (4), ledit procédé comprenant les étapes de:
- mettre la première enceinte de réglage (7) sous une pression de la source de fluide de pression (11) par une deuxième vanne 2/2 (23) réalisée en tant que vanne de commande (16), afin de sortir la tige (4),
- dépressuriser la deuxième enceinte de réglage (8) vers le volume du réservoir (14) par une quatrième vanne 2/2 (29) réalisée en tant que vanne proportionnelle, de sorte que le fluide de pression hydraulique circule de la quatrième vanne (29) directement vers le volume du réservoir (14) dans une conduite séparée (72), sans interposition de vannes additionnelles,
- mettre la deuxième enceinte de réglage (8) sous une pression de la source de fluide de pression (11) par une première vanne 2/2 (22) réalisée en tant que vanne de commande, afin de retirer la tige (4),
- dépressurisant en même temps la première enceinte de réglage vers le volume du réservoir (14) par une troisième vanne 2/2 (28) réalisée en tant que vanne proportionnelle, de sorte que du fluide de pression hydraulique circule de la troisième vanne (28) directement verse le volume du réservoir (14) dans une conduite séparée (71), sans interposition de vannes additionnelles.

16. Dispositif d'actionnement hydraulique (1), notamment pour capote de cabriolet, comprenant un dispositif anti-pincement et un élément d'actionnement hydraulique (2) relié à une source de fluide de pression (11) par au moins une conduite de pression de travail (12), ledit dispositif comprenant en outre au moins un capteur de grandeur de réglage (41, 42, 43, 74) pour déterminer une grandeur de réglage de l'élément d'actionnement hydraulique (2), et comprenant un appareil de commande (39) destiné à régler un débit volumétrique amené à l'élément d'actionnement hydraulique (2), ce débit volumétrique pouvant être réduit selon une grandeur de réglage de l'élément d'actionnement hydraulique (2), cette grandeur de réglage étant une pression de réglage et, afin de déterminer la pression de réglage, un capteur de pression (41, 42, 74) réalisé en tant que capteur de grandeur de réglage est disposé sur l'élément d'actionnement hydraulique (2) et/ou sur une conduite de pression de réglage (9, 10) fournissant la pression de réglage à l'élément d'actionnement hydraulique (2),
**caractérisé en ce que**
le système de réglage comprend des commutateurs de renversement de marche qui détectent la fin du mouvement de l'élément d'actionnement hydraulique (2), et **en ce qu'**une augmentation de pression dans une enceinte de pression de réglage (7, 8) de l'élément d'actionnement (2) et/ou dans une conduite d'alimentation en fluide de pression (9, 10) pendant un mouvement non pas encore fini est reconnue comme un blocage à cause d'un obstacle.

17. Dispositif d'actionnement hydraulique selon la revendication 16, **caractérisé en ce qu'**une valeur de différence entre la grandeur de réglage et une valeur comparative peut être déterminée par l'appareil de commande (39) et le débit volumétrique amené à l'élément d'actionnement hydraulique (2) peut être réduit lors d'un dépassement de la première valeur limite par la valeur de différence.

18. Dispositif d'actionnement hydraulique selon l'une quelconque des revendications 16 ou 17, **caractérisé en ce que** le débit volumétrique peut être réduit à zéro.

19. Dispositif d'actionnement hydraulique selon l'une quelconque des revendications 16 à 18, **caractérisé en ce que** la direction du débit volumétrique est réversible.

20. Dispositif d'actionnement hydraulique selon l'une quelconque des revendications 16 à 19, **caractérisé en ce qu'**un capteur de chemin (43) est disposé sur l'élément d'actionnement hydraulique afin de déterminer une grandeur de réglage.

21. Dispositif d'actionnement hydraulique selon l'une quelconque des revendications 16 à 20, **caractérisé par** un appareil de commande (39) fournissant à des solénoïdes (30-33) de manière individuelle et indépendante les uns des autres, notamment par un système de bus, un débit mesuré individuellement afin d'actionner les vannes (22, 23, 28, 29).

22. Dispositif d'actionnement hydraulique selon l'une quelconque des revendications 16 à 21, **caractérisé en ce que** l'on réalise une première et une deuxième vanne (22, 23) en tant que vannes de commande pour le serrage hydraulique d'un vérin (3) et pour réduire l'échappement de fluide de pression de la première et/ou deuxième enceinte de réglage (7 et/ou 8) décroissantes.

23. Dispositif d'actionnement hydraulique selon l'une quelconque des revendications 16 à 22, **caractérisé en ce qu'**une ou la première et une ou la deuxième vanne (22, 23) est/sont réalisée(s) en tant que vanne(s) proportionnelle(s) et **en ce qu'**une troisième et une quatrième vanne (28, 29) sont réalisées en tant que vannes de commande de manière à influencer la vitesse de mouvement d'une tige (49), notamment de manière indépendante d'une commande de vitesse de rotation d'un moteur électrique (20) d'une source de fluide de pression (11).

24. Dispositif d'actionnement hydraulique selon la revendication 23, **caractérisé en ce que** la troisième et la quatrième vanne (22, 23) sont reliées directement à un volume du réservoir (14) de manière à permettre la dépressurisation sélective d'une première enceinte de pression de réglage (7) ou d'une deuxième enceinte de pression de réglage (8) vers le volume du réservoir (14) par la troisième ou quatrième vanne (28, 29), sans interposition de vannes additionnelles.

25. Dispositif d'actionnement hydraulique selon l'une quelconque des revendications 16 à 24, **caractérisé en ce qu'**une ligne de signalisation (44) est reliée à une entrée de l'appareil de commande (39), ladite ligne de signalisation (44) fournissant à l'appareil de commande (39) un signal de tension d'un dispositif de mesure de position (41, 42), ledit dispositif de mesure de position (41, 42) détectant la position respective d'une/de la tige (4).

26. Dispositif d'actionnement hydraulique selon l'une quelconque des revendications 23 ou 24, **caractérisé en ce que** la position inactive de la troisième ou quatrième vanne (28, 29) correspond à une position de commutation avec une liaison permettant la circulation de la première ou deuxième enceinte de pression de réglage (7 ou 8) vers le volume du réservoir (14), de sorte que le niveau de pression de la première ou deuxième enceinte de pression de réglage (7 ou 8) en cas de solénoïdes (30, 33) non pas mis sous courant corresponde au niveau de pression du volume du réservoir (14), et la position inactive de la première et deuxième vanne (22, 23') est une position de commutation avec blocage de circulation.

27. Dispositif d'actionnement hydraulique selon l'une quelconque des revendications 23, 24 ou 26, **caractérisé en ce qu'**au moins un capteur de pression (41, 42, 74) est disposé entre l'enceinte de réglage (7, 8) et une première et troisième (22, 28) ou une deuxième et quatrième vanne (23, 29), respectivement branchées en parallèle, dans la conduite de pression de réglage (9, 10), un signal de pression (76) étant fourni à une unité d'évaluation (78) afin de déterminer la position et la vitesse de la tige (4) - et ainsi notamment de la capote du cabriolet - ladite unité d'évaluation (78) fournissant à la troisième et quatrième vanne (28, 29) directement reliées au volume du réservoir (14) un signal de réglage par un régulateur de pression (80), afin de régler la vitesse de la tige (4) et/ou de la capote du cabriolet.

28. Dispositif d'actionnement hydraulique selon l'une quelconque des revendications 16 à 27, **caractérisé en ce que** le dispositif d'actionnement est réalisé en tant que capote de cabriolet ou hayon arrière ou spoiler extensible.
